# EUROPEAN PATENT APPLICATION

(11) **EP 4 769 131 A1**
(43) Date of publication of application: **01.07.2026**
(21) Application number: 24855692.0
(22) Date of filing: 15.08.2024
(51) Int. Cl.: G06F 9/451

(54) **INFORMATION PROCESSING METHOD AND APPARATUS, AND DEVICE AND STORAGE MEDIUM**

(30) Priority: 21.08.2023 CN 202311058487
(71) Applicant: Beijing Zitiao Network Technology Co., Ltd., Beijing 100190 (CN)
(72) Inventor: ZHAO, Tianshuang, Beijing 100028 (CN); TANG, Yuxi, Beijing 100028 (CN)
(74) Representative: Grünecker Patent- und Rechtsanwälte PartG mbB
(86) International application number: PCT/CN2024/112250
(87) International publication number: WO 2025/039966

(57) **Abstract**

Embodiments of the disclsoure provide a method, apparatus, device, and storage medium for information processing. The method includes: determining, in response to detecting a favorite operation for a target work, whether to present guidance information for a predetermined favorites folder at least based on at least one of: related information of the target work, or related information of favorites folders; and presenting, in accordance with a determination of presenting the guidance information for the predetermined favorites folder, the guidance information for the predetermined favorites folder within a predetermined area of a user interface. In this way, the user may be guided to favorite the target work to the predetermined favorites folder to help the user better classify and favorite the target work, thereby improving the user experience.

## Description

This application claims priority of Chinese Patent Application No. 2023110584874, filed on August 21, 2023, and entitled "METHOD, APPARATUS, DEVICE, AND STORAGE MEDIUM FOR INFORMATION PROCESSING" the entire content of which is incorporated herein by reference.

### FIELD

Example embodiments of the present disclosure generally relate to the field of computers, and in particular, to method, apparatus, device, and computer readable storage medium for information processing.

### BACKGROUND

With the rapid development of internet technologies, various applications have become an important tool in people's daily life. Different applications often have different functions, and users may implement specific services through applications with specific functions. For example, a user may post, browse, and view various types of content in an application, including multimedia content such as video, picture, picture compilation, voice, and the like. Furthermore, in order to facilitate the user to access the media work again, the function of favorites is provided in many applications, so that the user may store part of the work to the favorites. If the user may be guided to keep good favorite and classification habits, the using experience of the user may be effectively improved.

### SUMMARY

In a first aspect of the present disclosure, an information processing method is provided. The method includes: determining, in response to detecting a favorite operation for a target work, whether to present guidance information for a predetermined favorites folder at least based on at least one of: related information of the target work, or related information of favorites folders; and presenting, in accordance with a determination of presenting the guidance information for the predetermined favorites folder, the guidance information for the predetermined favorites folder within a predetermined area of a user interface.

In a second aspect of the present disclosure, an apparatus for information processing is provided. The apparatus includes: a guidance information determination module configured to: determine, in response to detecting a favorite operation for a target work, whether to present guidance information for a predetermined favorites folder at least based on at least one of: related information of the target work, or related information of favorites folders; and a guidance information presentation module configured to: present, in accordance with a determination of presenting the guidance information for the predetermined favorites folder, the guidance information for the predetermined favorites folder within a predetermined area of a user interface.

In a third aspect of the present disclosure, an electronic device is provided. The device includes at least one processing unit; and at least one memory, the at least one memory being coupled to the at least one processing unit and storing instructions for execution by the at least one processing unit. The instructions, when executed by the at least one processing unit, cause the device to perform the method of the first aspect.

In a fourth aspect of the present disclosure, a computer-readable storage medium is provided. The medium has a computer program stored thereon, when executed by the processor, the computer program implementing the method of the first aspect.

It should be understood that the content described in this section is not intended to limit the key features or important features of embodiments of the present disclosure, nor is it intended to limit the scope of the present disclosure. Other features of the present disclosure will become easy to understood from the following description.

### BRIEF DESCRIPTION OF DRAWINGS

The above and other features, advantages and aspects of the various embodiments of the present disclosure will become more apparent in combination with the accompanying drawings and with reference to the following detailed description. In the accompanying drawings, the same or similar reference symbols refer to the same or similar elements, wherein:
FIG. 1 illustrates a schematic diagram of an example environment in which embodiments of the present disclosure can be implemented;
FIG. 2 illustrates a flowchart of a process for information processing according to some embodiments of the present disclosure;
FIG. 3A to FIG. 3F illustrate schematic diagrams of an example of an information presentation page according to some embodiments of the present disclosure, respectively;
FIG. 4A to FIG. 4F illustrate schematic diagrams of an example of an information presentation page according to some embodiments of the present disclosure, respectively;
FIG. 5 illustrates a schematic diagram of an example of an information presentation page according to some embodiments of the present disclosure;
FIG. 6 illustrates a block diagram of an apparatus for information processing according to some embodiments of the present disclosure; and
FIG. 7 illustrates an electronic device in which one or more embodiments of the present disclosure may be implemented.

### DETAILED DESCRIPTION

Embodiments of the present disclosure will be described in more detail below with reference to the accompanying drawings. Although certain embodiments of the present disclosure are shown in the drawings, it would be appreciated that the present disclosure can be implemented in various forms and should not be interpreted as limited to the embodiments described herein. On the contrary, these embodiments are provided for a more thorough and complete understanding of the present disclosure. It would be appreciated that the accompanying drawings and embodiments of the present disclosure are only for the purpose of illustration and are not intended to limit the scope of protection of the present disclosure.

In the description of embodiments of the present disclosure, the term "including" and similar terms may be understood as open inclusion, that is, "including but not limited to". The term "based on" may be understood as "at least partly based on". The term "one embodiment" or "the embodiment" may be understood as "at least one embodiment". The term "some embodiments" may be understood as "at least some embodiments". Other explicit and implicit definitions may also be included below.

It may be understood that the data involved in the technical solution (including but not limited to the data itself, the acquisition or use of the data) should follow the requirements of the corresponding laws and regulations and related rules.

It may be understood that, before the technical solutions disclosed in the embodiments of the present disclosure are used, the types, the usage scope, the usage scenario of user information involved in the present disclosure, and the like should be notified to the user to obtain the authorization of the user in an appropriate manner according to the relevant laws and regulations.

For example, in response to receiving an active request from a user, a prompt message is sent to the user to explicitly prompt the user that the operation requested operation by the user will need to obtain and use the user's user information, so that users may select themselves whether to provide user information to the software or the hardware such as an electronic device, an application, a server or a storage medium that perform the operation of the technical solution of the present disclosure according to the prompt information.

As an optional but non-restrictive implementation, in response to receiving the user's active request, the method of sending prompt information to the user may be, for example, a pop-up window in which prompt information may be presented in text. In addition, pop-up windows may also contain selection controls for users to choose "agree" or "disagree" to provide user information to electronic devices.

It may be understood that the above notification and acquisition of user authorization process are only schematic and do not limit the implementations of the present disclosure. Other methods that meet relevant laws and regulations may also be applied to the implementation of the present disclosure.

As briefly mentioned above, more and more applications are designed to provide various services to users currently. For example, a user may post, browse, and view various types of content in an application, including multimedia content such as videos, pictures, picture compilation, and sounds.

When presenting different works to a user, in some implementations, at least one target work may be presented in a particular label page. Although such implementation achieves a classification of the work in a sense, there is at least the defects discussed below. The label pages are mostly maintained by the application system. In this case, the user may not able to add the work to the specific label page according to the personal preference and demand, resulting that the implementation may not able to meet the personalized classification and collection requirements of the user.

In order to facilitate the user to access the media work again, many applications provide the functionality of the favorites folder so that the user may store the partial work to the favorites folder. Unlike label page, users may typically maintain content in the favorites folder, for example, adding work to or delete from the favorites folder. It may be seen that, compared with the label page maintained by the system, the favorites folder function may better meet the user's requirements for classification and favorites of works. In view of this, if the user may be guided to classify the target work to the predetermined favorites folder with the help of favorites folder function, the user may be helped to get into better collect and classify habits, thereby effectively improving the user experience.

Therefore, embodiments of the present disclosure provide a solution for information processing. The solution includes: determining, in response to detecting a favorite operation for a target work, whether to present guidance information for a predetermined favorites folder at least based on at least one of: related information of the target work, or related information of favorites folders; and presenting, in accordance with a determination of presenting the guidance information for the predetermined favorites folder, the guidance information for the predetermined favorites folder within a predetermined area of a user interface. In this way, the user may be guided to favorite the target work to the predetermined favorites folder to help the user better classify and favorite the target work, thereby improving the user experience.

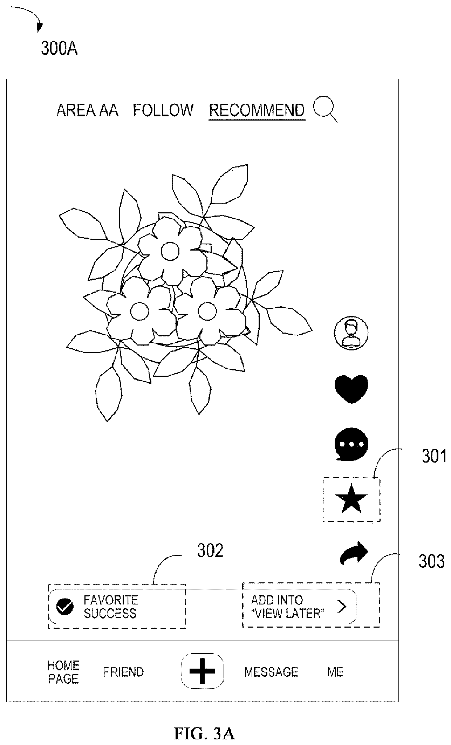

For a better understanding of various embodiments of the present disclosure, the user interfaces illustrated in FIG. 3A to FIG. 5 are referenced in the following example embodiments. It should be understood that the user interfaces shown in FIG. 3A to FIG. 5 are merely examples, and various designs may actually exist. For example, various graphical elements and/or control in the user interface may have different arrangements and different visual representations, where one or more elements and/or control may be omitted or replaced, and one or more other elements and/or control may also exist. In addition, any suitable content may be included in the user interface. The scope of the present disclosure is not limited in this respect.

Further, the user may implement switching and jumping of the user interface by activating a control/entry in each interface. It should be understood that the logic for switching and jumping may be arbitrarily set. For example, in example embodiments, the user jumps from the first user interface to the second user interface by activating the control. In other embodiments, the user jumps from the first user interface to the third user interface by activating another control. The present disclosure is not limited in this respect. It should also be understood that although multiple user interfaces are described in one particular embodiment, any interface described in the present disclosure may be independently implemented and protected as an individual embodiment.

In addition, it should also be understood that in some example embodiments below, the predetermined favorites folder are determined as "review later" favorites folder. The "review later" favorites folder is for example purposes only. Indeed, the name of the predetermined favorites may be designed in any way and/or the predetermined favorites may be used for any particular purpose classification. The present disclosure is not limited in this respect.

Further, the term "target work" of the present disclosure refers to any type of media work, including but not limited to an audio file, a video file, a picture file, a text file, and the like. Specifically, the target work may be a short video, a music, a picture, a picture compilation, a multimedia segment, an audio-visual material, a fiction, and the like. The present disclosure is not limited in this respect.

### Example Environment

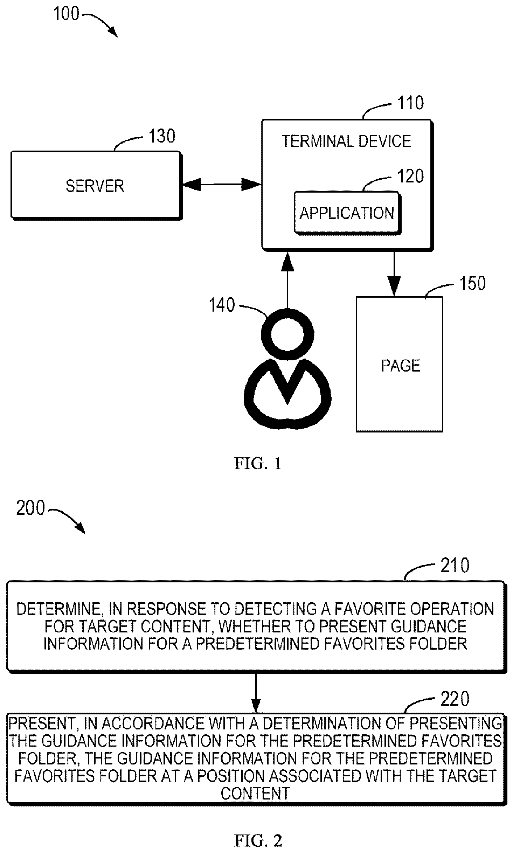

FIG. 1 illustrates a schematic diagram of an example environment 100 in which embodiments of the present disclosure may be implemented. In this example environment 100, an application 120 is installed in the terminal device 110. The user 140 may interact with the application 120 via the terminal device 110 and/or an attachment device of the terminal device 110. The application 120 may be a content sharing application capable of providing various kinds of services related to the media content/work to the user 140, including browsing, commenting, forwarding, creating (e.g., photographing and/or editing), posting, and the like. As used herein, "media content/work" includes one or more types of content, such as a video, a picture, an animated picture, a picture compilation, an audio, a text, and the like.

In environment 100 of FIG. 1, the terminal device 110 may present page 150 of the application 120 if the application 120 is at an active state. The page 150 may include various pages that the application 120 may provide, such as an information presentation page, a content creating page, a content posting page, a message page, a personal homepage, and the like. The application 120 may provide a content browsing function to browse various types of content posted in the application 120. The application 120 may also provide a content creating function, including photographing, uploading, editing, and/or posting media content. The application 120 may also provide an interactive function, including interacting with other users (for example, adding friends) and interacting with various types of content (including likes, favorites, comments, etc.).

In some embodiments, the terminal device 110 communicates with a server 130 to enable provisioning of services to the application 120. The terminal device 110 may be any type of mobile terminal, fixed terminal, or portable terminal, including a mobile phone, a desktop computer, a laptop computer, a notebook computer, a netbook computer, a tablet computer, a media computer, a multimedia tablet, a personal communication system (PCS) device, a personal navigation device, a personal digital assistant (PDA), an audio/video player, a digital camera/video camera, a positioning device, a television receiver, a radio broadcast receiver, an electronic book device, a gaming device, or any combination of the foregoing, including accessories and peripherals of these devices, or any combination thereof. In some embodiments, the terminal device 110 may also support any type of interface for a user (such as a "wearable" circuit, etc.). The server 130 may be various types of computing systems/servers capable of providing computing power, including but not limited to, mainframes, edge computing nodes, computing devices in a cloud environment, and the like.

It should be understood that the structures and functions of the various elements in the environment 100 are described for example purposes only and do not imply any limitation to the scope of the present disclosure.

### Example Process

FIG. 2 illustrates a flowchart of a process 200 for information processing according to some embodiments of the present disclosure. The process 200 may be implemented at the terminal device 110. The process 200 is described below with reference to FIG. 1.

At block 210, in response to detecting a favorite operation for a target work, the terminal device 110 determines whether to present guidance information for a predetermined favorites folder.

At block 220, in accordance with a determination of presenting the guidance information for the predetermined favorites folder, the terminal device 110 presents the guidance information for the predetermined favorites folder within a predetermined area of a user interface. For example, the guidance information for the predetermined favorites folder is presented in a lower area, a middle area, or an upper area of the user interface. Further, the guidance information may be presented in various forms such as pop-up windows and bubbles. Further, in some embodiments, in order to better prompt the guidance information to the user, a corresponding effect/action effect may be added to the guidance information, or a corresponding prompt voice may be played along with the presentation of the guidance information.

In this way, the user may be guided to favorite the target work to the predetermined favorites folder, helping the user to better classify and favorite the target work, thereby improving the user experience.

According to some embodiments of the present disclosure, whether to present guidance information may be determined according to at least one factor, and the at least one factor may also be reasonably designed according to actual needs.

In some embodiments, whether to present guidance information for the predetermined favorites folder may be determined based on related information of the target work. Additionally, in some embodiments, the related information of the target work includes: a content capacity of the target work, a viewing condition of a user on the target work.

In example embodiments of the target work being video/audio, the content capacity of the target work may be playback duration of the video/audio. In example embodiments of the target work being a picture compilation, the content capacity of the target work may be the number of pictures in the picture compilation. In example embodiments of the target work being text content, the content capacity of the target work may be a text length of the text content.

In some embodiments, the viewing condition of the user on the target work may be: whether the user has already viewed the target work, the content size of the unviewed target work, or the proportion condition of viewed/unviewed content by the user.

In example embodiments of the target work being video/audio, the viewing condition of the user on the target work may be whether the video/audio has been played, the duration of the unviewed video/audio, or whether played/unplayed video/audio has reached a predetermined percentage. In example embodiments of the target work being a picture compilation, the viewing condition of the user on the target work may be whether the picture compilation has been viewed, the number of unviewed pictures, whether the viewed/unviewed picture by the user has reached a predetermined percentage. In example embodiments of the target work being text content, the viewing condition of the user on the target work may be whether the text content has been viewed, the text length of unviewed text content, and whether the unviewed/viewed text content by the user has reached a predetermined percentage.

It should be understood that the above examples of related information of the target work are merely examples, and should not be understood as limitation of the present disclosure. In other embodiments, the related information of the target work may be defined as other parameters, for example, whether belongs to a specific poster, whether belongs to a predetermined content type, whether belongs to a hot point media, or the like. The present disclosure is not limited in this respect.

Alternatively or additionally, in some embodiments, whether to present the guidance information for the predetermined favorites folder may be determined based on the related information of the favorites folder. Additionally, the related information of the favorites folder includes: the number of created favorites folders, or the number of added works in the predetermined favorites folder. In example embodiments of the predetermined favorites folder being "view later", the related information of the favorites folder may be: whether other favorites folders other than "view later" exist, the number of favorites folders that the user has created, and/or the number of target works that have been favorited in the "view later" favorites folder.

In the following, how to determine to present the guidance information for the predetermined favorites folder based on at least one of the related information of the target work and the related information of the favorites folder will be discussed in conjunction with specific embodiments.

In some embodiments, when the content capacity of the target work exceeds the capacity threshold, the terminal device 110 may determine to present the guidance information for the predetermined favorites folder. For example, when the target work is video/audio whose total duration exceeds a predetermined duration, the number of pictures exceeds a predetermined number of picture compilation, and the text content is relatively long, the terminal device 110 may determine to present the guidance information for the predetermined favorite folder. This is because the user prefer to favorite target works with medium or longer content capacity.

Alternatively or additionally, in some embodiments, when the viewing ratio of the user on the target work does not exceed the ratio threshold (or the content capacity of the unviewed target work by the user exceeds the threshold capacity), the terminal device 110 may determine to present the guidance information for the predetermined favorites folder, for example, the viewing proportion of the viewed video/audio is lower than a predetermined percentage, or the duration of the unviewed video/audio exceeds a predetermined duration. This is because the user has potential requirements of continuing to view such target work.

Alternatively or additionally, in some embodiments, the terminal device 110 may determine to present guidance information for the predetermined favorites folder when the created favorites folder does not include other favorites folders other than the predetermined favorites folder. For example, when only a predetermined favorites folder exists, the terminal device 110 may determine to present guidance information for the predetermined favorites folder. This is because if only a predetermined favorites exists, it may be inferred that the user has not yet made good classification and favorites habits, and the user may be guided to classify and favorite the target work.

Alternatively or additionally, in some embodiments, the terminal device 110 may determine to present guidance information for the predetermined favorites folder when the number of added work in the predetermined favorites folder is below a threshold number. For example, only a small number of target work exists in the predetermined favorites, and the terminal device 110 may determine to present guidance information for the predetermined favorites folder. At this point, it may be considered that the user has not sufficiently focused on the predetermined favorites folder. In this case, the user may be guided to favorite the target work to the predetermined favorites folder.

Additionally, in order to avoid bad user experience caused by too much guidance, in a certain condition, the terminal device determines not to present guidance information for the predetermined favorites folder. In some embodiments, the guidance information for the predetermined favorites folder is determined to be present only if the number of presentations of the guidance information within a predetermined time duration does not reach the threshold number. On the contrary, even if other rules for triggering the presentation of the guidance information are satisfied, the guidance information is no longer displayed. For example, when the predetermined time duration is one day and the threshold number is three times, the presentation of the guidance information is no longer triggered after the guidance information is presented for three times. In this way, the number of presentation times of the guidance information may be controlled within a reasonable range.

It should be understood that the above various embodiments of determining whether to present the guidance information may be implemented separately or in any combination. In this way, the presentation rules of the guidance information may be flexibly and reasonably designed.

In the following, the presentation of the guidance information will be further described in conjunction with FIG. 3A to FIG. 3C.

In some embodiments, the terminal device 110 presents first guidance information in association with confirmation information of a favorite operation for the target work, where the first guidance information is configured to guide the user to classify the target work into a predetermined favorites folder.

Reference is made to FIG. 3A firstly. In FIG. 3A, after the user triggers the operation of favoriting the target work (e.g., clicking on the favorites control 301 with stars appearance), the favorites control 301 is filled with a bright yellow or other color. In response to the target work being successfully favorited, confirmation information 302 (favorite success) of the favorite operation for the target work is presented within the predetermined area, and first guidance information 303 (add into "view later") is presented in association to guide the user to classify the target work to the predetermined favorites. In this user interface, the user may be effectively prompted with the predetermined favorites folder by presenting the first guidance information 303 (add into "view later") to the user.

In some embodiments, after detecting the favorite classification operation for the target work, the terminal device 110 may present an optional favorites folder list, and the favorites list at least includes an identifier of the predetermined favorites folder. Further, the terminal device 110 may present second guidance information in association with the identifier of the predetermined favorite, where the second guidance information is configured to highlight the predetermined favorite folder.

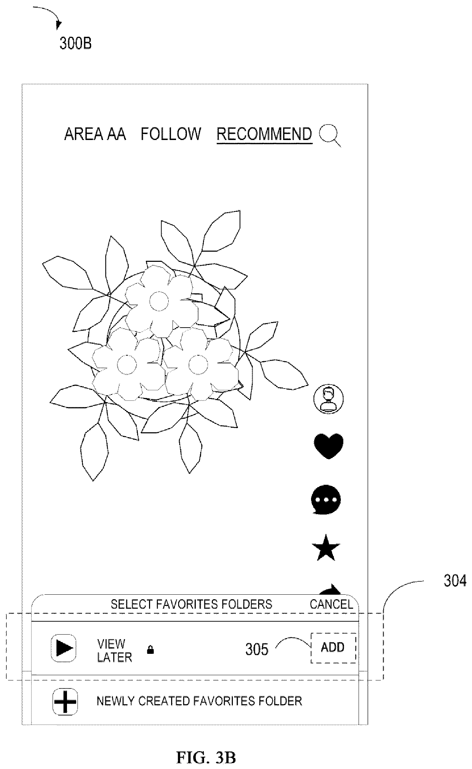

As a specific embodiment, after detecting the favorite classification operation for the target work, for example, after detecting that the user triggers the prompt block in FIG. 3A, the user interface switches to FIG. 3B. In FIG. 3B, a favorites folder list is displayed (the created favorites folder only includes a predetermined favorites folder "view later"), and second guidance information 305 included is configured to highlight the predetermined favorites folder. It should be understood that the second guidance information for highlighting the predetermined favorites folder may present as a variety of forms, for example, displaying a "add" word that is set to a conspicuous color, bolded or added with action effect, the name of the favorites folder "view later" is set to a conspicuous color, bolded or added with action effect, the favorites folder "view later" is placed at top later, and so on. The present disclosure is not limited in this respect.

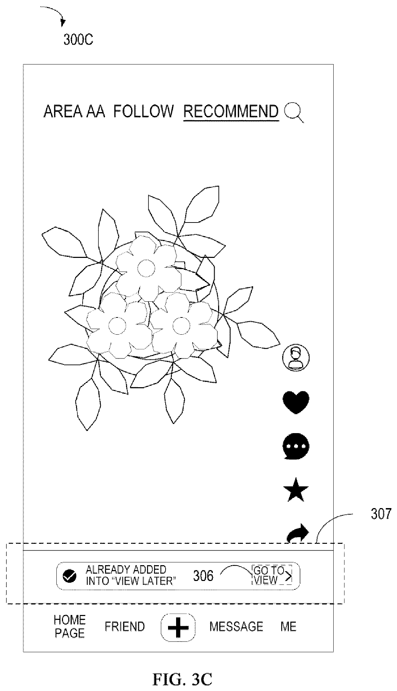

When the user triggers pop-up block 304 in FIG. 3B, the user interface switches to FIG. 3C. In FIG. 3C, pop-up block 307 prompts the user that the target work has been added to the predetermined favorites folder, and further prompts that the user may view the predetermined favorites folder, e.g., display viewing prompt information 306 "go to view". The user may switch to the user interface such as the user homepage, favorites folder list, and predetermined favorites folder by triggering the pop-up block 307, so that the user may conveniently view the predetermined favorites folder.

Through the foregoing process, when the predetermined policy is satisfied, the terminal device 110 may guide the user to add the target work to the predetermined favorites folder by presenting the guidance information. As a specific embodiment, when the created favorites folder includes only the predetermined favorites folder, and/or the number of works within the predetermined favorites folder is less than a predetermined threshold, and/or the content capacity of the target work is greater than a predetermined threshold capacity, and/or the target work has not yet been fully viewed, the user is guided to classify the target work to the predetermined favorites folder through FIG. 3A to FIG. 3C.

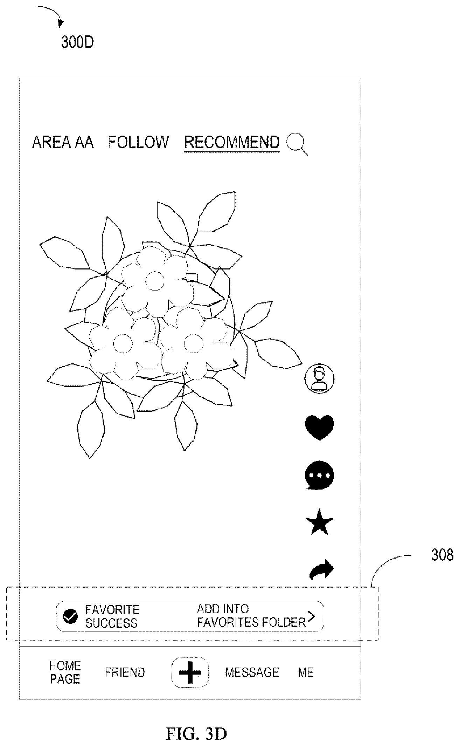

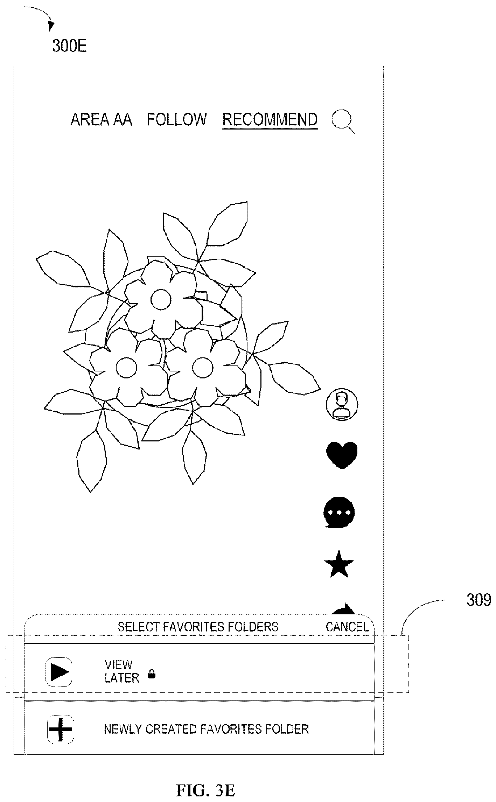

In the following, the following example process is described in conjunction with FIG. 3D, FIG. 3E, and FIG. 3C: when the created favorites folder by the user includes only the predetermined favorites folder, it is determined not to present the guidance information for the predetermined favorites folder, or at least the guidance strength that guides the user to classify the target work to the predetermined favorites folder is reduced.

Reference is made to FIG. 3D firstly. In FIG. 3D, after the user triggers the operation of favoriting the target work, the favorites control is filled with a bright yellow or other color. In response to the target work being successfully favorited, confirmation information (favorite success) of the favorite operation for the target work is presented within the predetermined area, and guidance information "add into favorites folder" is presented in association to guide the user to classify the target work to the predetermined favorites folder. Compared with the user interface shown in FIG. 3A, the user interface of FIG. 3D does not present guidance information for the predetermined favorites folder, but only guides the user to classify and favorite the target work.

In the following, after detecting that the user triggers the prompt block in FIG. 3D, the user interface switches to FIG. 3E. In FIG. 3E, the favorites folder list is displayed (the favorites folder created by the user includes only a predetermined favorites "view later"). Compared to the user interface shown in FIG. 3B, the user interface of FIG. 3E does not present the second guidance information for highlighting the predetermined favorites folder, but only the predetermined favorites folder is placed at top.

When the user triggers pop-up block 309 in FIG. 3E, the user interface may switch to FIG. 3C to prompt the user that the target work has been added to the "review later" favorites folder. The operation in the user interface shown in FIG. 3C by the user will not be repeated.

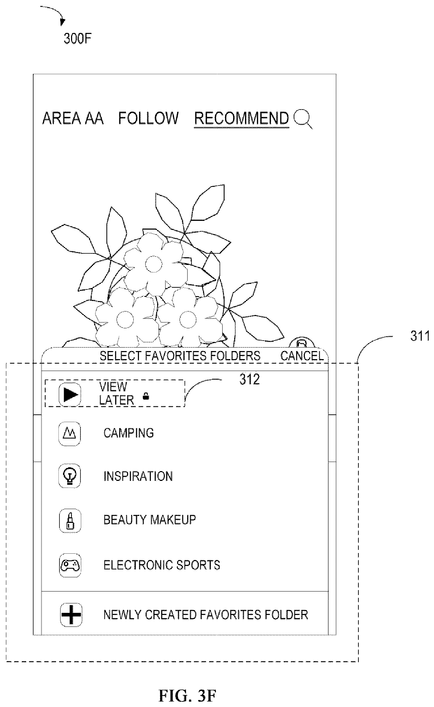

In the following, the following example process is described in conjunction with FIG. 3D, FIG. 3F, and FIG. 3C: when a favorites folder other than the predetermined favorites folder exists in the created favorites folders, it is determined not to present the guidance information for the predetermined favorites folder, or at least the guide strength that guides the user to classify the target work to the predetermined favorites folder is reduced.

Referring to FIG. 3D, after the user triggers the operation of favoriting the target work (for example, clicking a favorites control with a star appearance), the favorites control is filled with a bright yellow color. In response to the target work being successfully favorited, a confirmation information (favorite success) of the favorite operation for the target work is presented within the predetermined area, and guidance information (add into favorites folder) is presented in association to guide the user to classify the target work into the predetermined favorites folder.

When detecting that the user triggers the prompt block in FIG. 3D, the user interface switches to FIG. 3F. In FIG. 3F, a favorites folder list is displayed, including a predetermined favorites folder 312 "view later" and other created favorites folders. In the particular embodiment of FIG. 3F, the predetermined favorites folder "view later" is placed at top. When the user triggers an area associated with the predetermined favorites folder 312, the user interface switches to 3C to prompt the user that the target work has been added into the "review later" favorites folder. The operation in the user interface shown in FIG. 3C by the user will not be repeated.

It should be understood that if the user triggers an area associated with other favorites folders (e. g. camping), the target work will be added to other favorites folders and switch to other associated prompt interfaces.

In some embodiments, the predetermined favorites folder is a favorites folder with at least one of the following attributes: created by the system in default, the name of the favorites folder is not able to be modified by the user, the favorites folder is not able to be deleted by the user, the non-public accessibility of the favorites folder, or being placed at top in the favorites folder list of the user. These system attributes may prompt the user through the user interface, for example, the corresponding operation control is set to operation being disabled and/or when the user clicks the corresponding control, prompt information is popped up.

In some embodiments, the predetermined favorites folder is provided as a system favorites folder. In other words, creation of the favorites folder does not require any additional operations by the user.

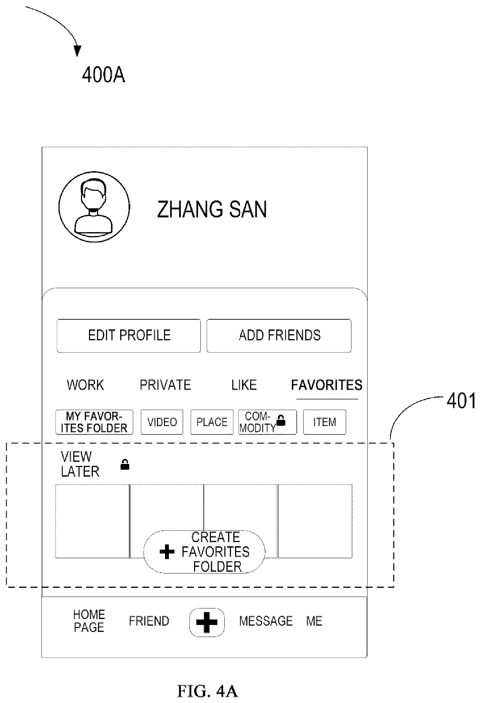

In some embodiments, if the user has created a favorites folder with the same name as the predetermined favorites, a combining operation may be performed on the predetermined favorites folder with the favorites folder created by the user. Alternatively, if the user does not have a favorite folder with the same name as the predetermined favorites folder, the predetermined favorites folder is created by the system for the user. In some embodiments, the predetermined favorites folder may be displayed at top in a corresponding user interface, that is, displayed as the first favorites folder of the favorites folder list. Referring to FIG. 4A, the predetermined favorites folder 401 (view later) is created as a system favorites folder, which is displayed at top in "my favorites folders".

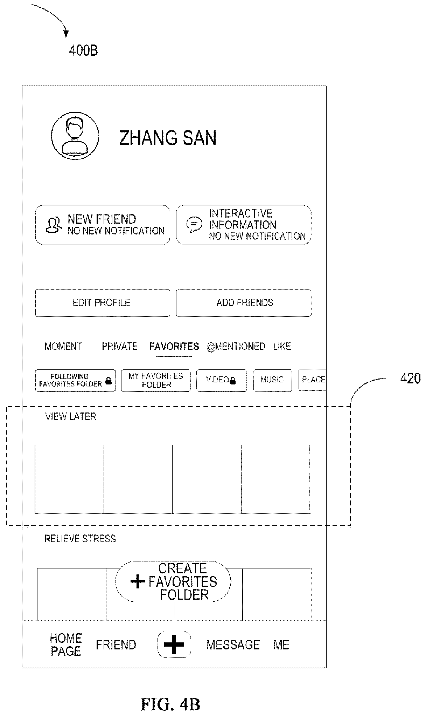

Additionally, the favorites folder may be followed and unfollowed by the user, like other favorites folders. In response to the predetermined favorites folder being followed by the user, the predetermined favorites folder may be added to the "followed favorites folders". The predetermined favorites folder may be removed from the "followed favorites folders" in response to the predetermined favorites folder being unfollowed by the user. Referring to FIG. 4B, when the predetermined favorites folder is followed, the predetermined favorites folder 402 (view later) is added to the "followed favorites folders".

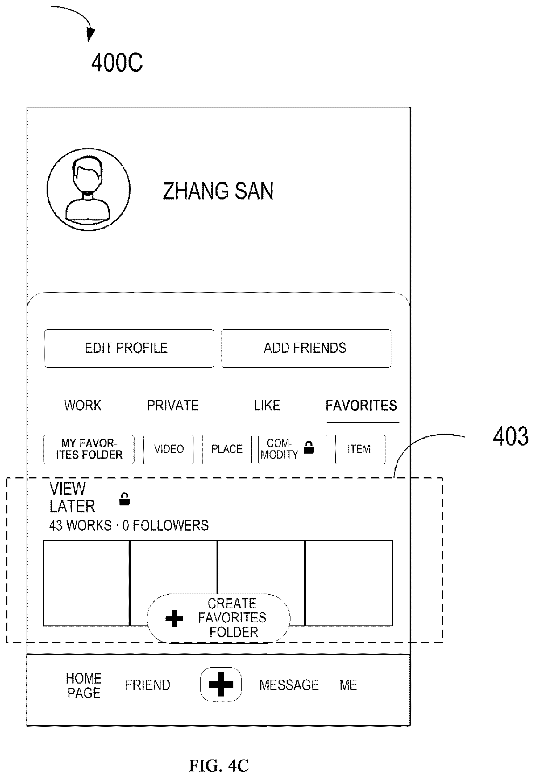

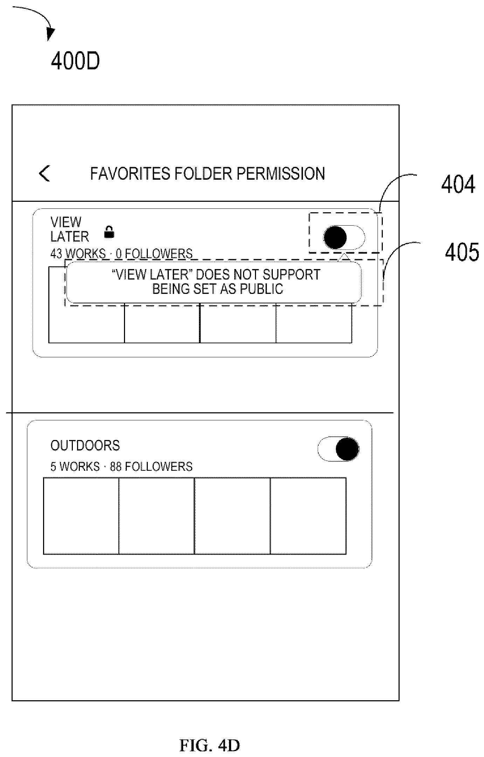

In some embodiments, the predetermined favorites folder has non-public accessibility, i.e., may not be accessible to other users. Referring to FIG. 4C, the predetermined favorites folder 403 (view later) is displayed with a non-public prompt 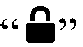 and displayed with "0 followers". With further reference to FIG. 4D, the control 404 setting the favorites publicness is set to disable, for example, the control 404 is set to light gray. Alternatively or additionally, when the user clicks on the control 404, the prompt information 405 is popped, to prompt that the predetermined favorites folder has a non-public accessibility, for example, "review later" does not support being set as public.

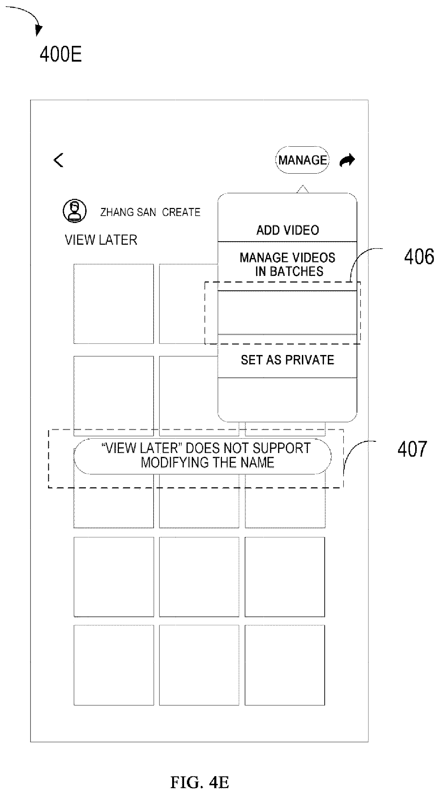

In some embodiments, the name of the predetermined favorites folder cannot be modified by the user. Referring to FIG. 4E, the modifying name control 406 is set to disable. Alternatively or additionally, when the user clicks on the control 406, the prompt information 407 is popped up, prompting that the name of the predetermined favorites folder may not be modified, for example, "view later" does not support modifying the name.

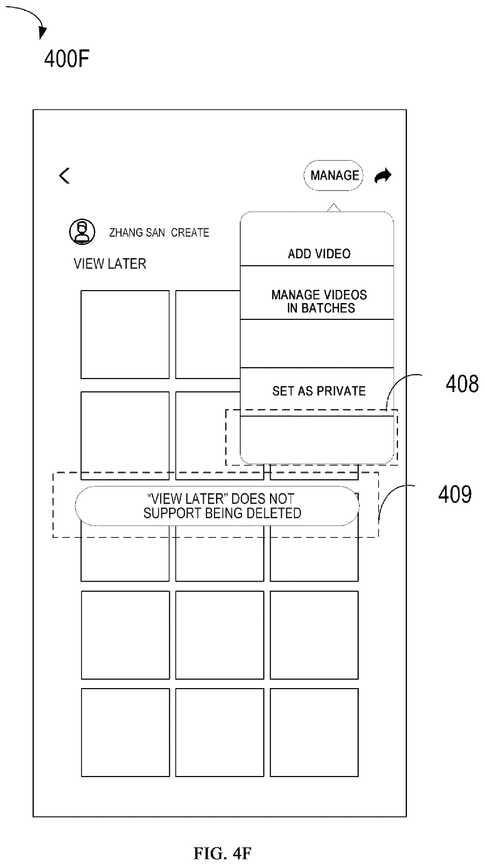

In some embodiments, the name of the predetermined favorites folder may not be deleted by the user. Referring to FIG. 4F, deleting favorites folder control 408 is set to disable. Alternatively or additionally, when the user clicks on the control 408, the prompt information 409 is popped up, prompting that the name of the predetermined favorites folder may not be deleted, for example, "review later" does not support being deleted.

Through the above example process, the target work may be added to the predetermined favorites folder. In some embodiments, if the target work is added to the predetermined favorites folder, the target work and the favorites indication information are presented to the user in the content recommendation page, where the favorites indication information indicates that the target work is added in the predetermined favorites folder.

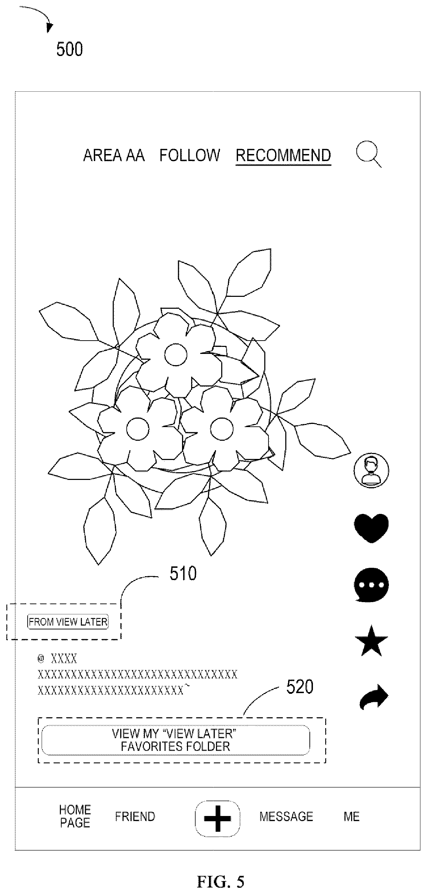

Referring to FIG. 5, when the target work is recommended, the user interface presents favorites indication information 510 "from review later", and the favorites indication information indicates that the target work is added into the view later favorites folder.

Alternatively or additionally, in some embodiments, while presenting the target work in the content recommendation page, the terminal device 110 also presents an entry control for the predetermined favorites, and the predetermined favorites folder is accessible via the entry control.

Referring to FIG. 5, when the target work is recommended, the terminal device 110 further presents the entry control 520 for the predetermined favorites folder while presenting the target work in the content recommendation page. The entry control displays prompt information - view my "review later" favorites folder. The user triggering any position of the entry control 520 may switch to display a user interface associated with the predetermined favorites folder to view the predetermined favorites folder.

In some embodiments, the recommendation policy for recommending the target work in the content recommendation page is updated based on the addition of the target work into the predetermined favorites folder.

In some embodiments, after the target work is added into the predetermined favorites folder, the recommendation weight of the target work may be increased to improve the probability that the target work is recommended.

Alternatively or additionally, after the target work is added into the predetermined favorites folder, it may exempt a partial recommendation constraint condition. For example, when the recommendation constraint condition is that the duration of the work is not able to exceed the predetermined duration, if the target work is added into the predetermined favorites folder, the target work may still be recommended even if the duration of the target work exceeds the predetermined duration.

Through the above operation, the user may be helped to develop good classification and favorites habits, thereby improving user experience.

### Example Apparatus and Device

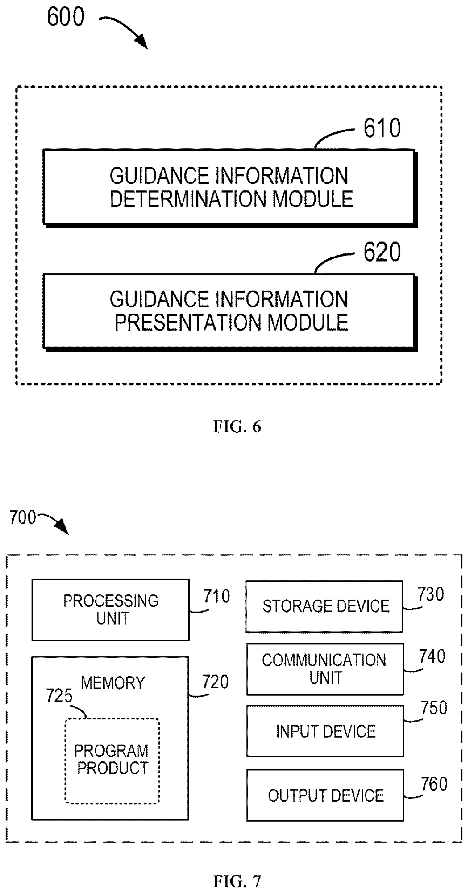

FIG. 6 is a schematic structural block diagram of an apparatus 600 for information processing according to some embodiments of the present disclosure. The apparatus 600 may be implemented or included in the terminal device 110. The various modules/components in the apparatus 600 may be implemented by hardware, software, firmware, or any combination thereof.

As shown in the figure, the apparatus 600 includes a guidance information determination module 610 configured to: determine, in response to detecting a favorite operation for a target work, whether to present guidance information for a predetermined favorites folder at least based on at least one of: related information of the target work, or related information of favorites folders; and a guidance information presentation module 620 configured to: present, in accordance with a determination of presenting the guidance information for the predetermined favorites folder, the guidance information for the predetermined favorites folder within a predetermined area of a user interface.

In some embodiments, the related information of the target work comprises: a content capacity of the target work, a viewing condition of a user on the target work.

In some embodiments, the related information of the favorites folder comprises: the number of created favorites folders, or the number of added works in the predetermined favorites folder.

In some embodiments, the guidance information determination module 610 is further configured to: determine, based on at least one of the related information of the target work and the related information of the favorites folder, that at least one of the following conditions is satisfied: a content capacity of the target work exceeding a capacity threshold, a content capacity of the target work that the user does not view exceeding a threshold capacity, a viewing ratio of the user to the target work not exceeding a threshold ratio, a created favorite folder excluding other favorites folder except the predetermined favorites, or the number of added works in the predetermined favorites being lower than a threshold number; and based on determining that the at least one condition is satisfied, determine to present the guidance information for the predetermined favorites.

In some embodiments, the guidance information determination module 610 is further configured to determine to present guidance information for the predetermined favorites folder based on a determination that the following condition is satisfied: the presentation number of the guidance information within the predetermined time period not reaching the threshold number.

In some embodiments, the guidance information presentation module 620 is further configured to: present first guidance information in association with confirmation information of the favorite operation for the target work, the first guidance information being configured to guide a user to classify the target work to the predetermined favorites folder.

In some embodiments, the guidance information presentation module 620 is further configured to: present an optional favorites folder list after detecting a favorite classification operation for the target work, the favorites folder list at least comprising an identifier of the predetermined favorites folder; and present second guidance information in association with the identifier of the predetermined favorites folder, the second guidance information being configured to highlight the predetermined favorites folder.

In some embodiments, the predetermined favorites folder are favorites folder with at least one of the following attributes: being created in default by the system, the name of the favorites folder being not able to be modified by the user, the favorites folder being not able to be deleted by the user, the non-public access of the favorites folder, or being put on the top in the user's favorites folder list.

In some embodiments, the apparatus 600 further includes a recommendation module (not shown) configured to: present, in accordance with an addition of the target work into the predetermined favorites folder, the target work and favorite indication information to the user in a content recommendation page, the favorite indication information indicating that the target work is added into the predetermined favorites folder.

In some embodiments, the apparatus 600 further includes a jumping module (not shown) configured to: present an entry control for the predetermined favorites folder while presenting the target work in the content recommendation page, the predetermined favorites folder being accessible via the entry control.

In some embodiments, a recommendation policy for recommending the target work in the content recommendation page is updated based on the addition of the target work into the predetermined favorites folder.

FIG. 7 illustrates a block diagram of an electronic device 700 in which one or more embodiments of the present disclosure may be implemented. It should be understood that the electronic device 700 illustrated in FIG. 7 is merely an example, and should not constitute any limitation on the functionality and scope of embodiments described herein. The electronic device 700 shown in FIG. 7 may be used to implement the terminal device 110 in FIG. 1 or the apparatus 500 in FIG. 5.

As shown in FIG. 7, the electronic device 700 is in the form of a general computing device. The components of the electronic device 700 may include, but are not limited to, one or more processors or processing units 710, a memory 720, a storage device 730, one or more communication units 740, one or more input devices 750, and one or more output devices 770. The processing units 710 may be an actual or virtual processors and can execute various processes according to the programs stored in the memory 720. In a multiprocessor system, multiple processing units execute computer executable instructions in parallel to improve the parallel processing capability of the electronic device 700.

The electronic device 700 typically includes a plurality of computer storage media. Such media can be any available media that is accessible to the electronic device 700, including but not limited to volatile and non-volatile media, removable and non-removable media. The memory 720 can be volatile memory (such as registers, caches, random access memory (RAM)), nonvolatile memory (such as a read-only memory (ROM), an electrically erasable programmable read-only memory (EEPROM), a flash memory), or some combination thereof. The storage device 730 can be any removable or non-removable medium, and can include machine-readable medium, such as a flash drive, a disk, or any other medium which can be used to store information and/or data (for example, used to train the training data) and can be accessed within the electronic device 700.

The electronic device 700 may further include additional removable/non-removable, volatile/non-volatile storage medium. Although not shown in FIG. 7, a disk driver for reading from or writing to a removable, non-volatile disk (such as a "floppy disk"), and an optical disk driver for reading from or writing to a removable, non-volatile optical disk can be provided. In these cases, each driver may be connected to the bus (not shown) by one or more data medium interfaces. The memory 720 can include a computer program product 725, which comprises one or more program modules, and these program modules are configured to execute various methods or actions of the various embodiments of the present disclosure.

The communication unit 740 implements communication with other electronic devices via a communication medium. In addition, functions of components in the electronic device 700 may be implemented by a single computing cluster or multiple computing machines, and these computing machines can communicate through a communication connection. Therefore, the electronic device 700 may be operated in a networking environment using a logical connection with one or more other servers, a network personal computer (PC), or another network node.

The input device 750 may be one or more input devices, such as a mouse, a keyboard, a trackball, etc. The output device 760 may be one or more output devices, such as a display, a speaker, a printer, etc. The electronic device 700 may also communicate with one or more external devices (not shown) through the communication unit 740 as required. The external device, such as a storage device, a display device, etc., communicate with one or more devices that enable users to interact with the electronic device 700, or communicate with any device (for example, a network card, a modem, etc.) that enables the electronic device 700 communicate with one or more other electronic devices. Such communication may be executed via an input/output (I/O) interface (not shown).

According to example embodiments of the present disclosure, there is provided a computer-readable storage medium having computer-executable instructions stored thereon, wherein the computer-executable instructions are executed by a processor to implement the method described above. According to example embodiments of the present disclosure, a computer program product is further provided, the computer program product being tangibly stored on a non-transitory computer-readable medium and including computer-executable instructions, and the computer-executable instructions are executed by a processor to implement the method described above.

Various aspects of the present disclosure are described herein with reference to flowcharts and / or block diagrams of the method, the device, the apparatus and the computer program product implemented in accordance with the present disclosure. It should be understood that each block of the flowchart and/or the block diagram, and the combinations of each blocks in the flowcharts and/or block diagrams may be implemented by computer readable program instructions.

These computer-readable program instructions may be provided to the processing units of general-purpose computers, special computers or other programmable data processing devices to produce a machine that generates a device to implement the functions/acts specified in one or more blocks in the flow chart and/or the block diagram when these instructions are executed through the processing units of the computer or other programmable data processing devices. These computer-readable program instructions may also be stored in a computer-readable storage medium. These instructions enable a computer, a programmable data processing device and/or other devices to work in a specific way. Therefore, the computer-readable medium containing the instructions includes a product, which includes instructions to implement various aspects of the functions/acts specified in one or more blocks in the flowchart and/or the block diagram.

The computer-readable program instructions may be loaded onto a computer, other programmable data processing apparatus, or other devices, so that a series of operational steps can be performed on a computer, other programmable data processing apparatus, or other devices, to generate a computer-implemented process, such that the instructions which execute on a computer, other programmable data processing apparatus, or other devices implement the functions/acts specified in one or more blocks in the flowchart and/or the block diagram.

The flowchart and the block diagram in the drawings illustrate the possible architecture, functions and operations of the system, the method and the computer program product implemented in accordance with the present disclosure. In this regard, each block in the flowchart or the block diagram may represent a part of a module, a program segment or instructions, which contains one or more executable instructions for implementing the specified logic function. In some alternative implementations, the functions marked in the block may also occur in a different order from those marked in the drawings. For example, two consecutive blocks may actually be executed in parallel, and sometimes can also be executed in a reverse order, depending on the function involved. It should also be noted that each block in the block diagram and/or the flowchart, and combinations of blocks in the block diagram and/or the flowchart, may be implemented by a dedicated hardware-based system that performs the specified functions or acts, or by the combination of dedicated hardware and computer instructions.

Various implementations of the present disclosure has been described above. The above description is example, not exhaustive, and is not limited to the disclosed implementations. Without departing from the scope and spirit of the described implementations, many modifications and changes are obvious to ordinary skilled in the art. The selection of terms used in this article aims to best explain the principles, practical application or improvement of technology in the market of each implementation, or to enable other ordinary skilled in the art to understand the various embodiments disclosed herein.

## Claims

1. A method of information processing, comprising:
determining, in response to detecting a favorite operation for a target work, whether to present guidance information for a predetermined favorites folder at least based on at least one of:
related information of the target work, or
related information of favorites folders; and
presenting, in accordance with a determination of presenting the guidance information for the predetermined favorites folder, the guidance information for the predetermined favorites folder within a predetermined area of a user interface.

2. The method of claim 1, wherein the related information of the target work comprises: a content capacity of the target work, a viewing condition of a user on the target work; and/or
wherein the related information of the favorites folder comprises: the number of created favorites folders, or the number of added works in the predetermined favorites folder.

3. The method of claim 1, wherein presenting the guidance information within the predetermined area of the user interface comprises:
presenting first guidance information in association with confirmation information of the favorite operation for the target work, the first guidance information being configured to guide a user to classify the target work to the predetermined favorites folder.

4. The method of claim 1, wherein presenting the guidance information within the predetermined area of the user interface comprises:
presenting an optional favorites folder list after detecting a favorite classification operation for the target work, the favorites folder list at least comprising an identifier of the predetermined favorites folder; and
presenting second guidance information in association with the identifier of the predetermined favorites folder, the second guidance information being configured to highlight the predetermined favorites folder.

5. The method of claim 1, further comprising:
presenting, in accordance with an addition of the target work into the predetermined favorites folder, the target work and favorite indication information to the user in a content recommendation page, the favorite indication information indicating that the target work is added into the predetermined favorites folder.

6. The method of claim 5, further comprising:
presenting an entry control for the predetermined favorites folder while presenting the target work in the content recommendation page, the predetermined favorites folder being accessible via the entry control.

7. The method of claim 5, wherein a recommendation policy for recommending the target work in the content recommendation page is updated based on the addition of the target work into the predetermined favorites folder.

8. An apparatus for information processing, comprising:
a guidance information determination module configured to: determine, in response to detecting a favorite operation for a target work, whether to present guidance information for a predetermined favorites folder at least based on at least one of:
related information of the target work, or
related information of favorites folders; and
a guidance information presentation module configured to: present, in accordance with a determination of presenting the guidance information for the predetermined favorites folder, the guidance information for the predetermined favorites folder within a predetermined area of a user interface.

9. An electronic device, comprising:
at least one processing unit; and
at least one memory, the at least one memory being coupled to the at least one processing unit and storing instructions for execution by the at least one processing unit, the instructions, when executed by the at least one processing unit, causing the device to perform the method of any of claims 1 to 7.

10. A computer-readable storage medium having a computer program stored thereon, the computer program, when executed by a processor, implementing the method of any of claims 1 to 7.
